# EUROPEAN PATENT APPLICATION

(11) **EP 2 671 496 A2**
(43) Date of publication of application: **11.12.2013**
(21) Application number: 13170229.2
(22) Date of filing: 03.06.2013
(51) Int. Cl.: A47L 15/42

(54) **Dishwasher**

(30) Priority: 04.06.2012 KR 20120060044
(71) Applicant: Samsung Electronics Co., Ltd, Gyeonggi-do 443-742 (KR)
(72) Inventor: Lim, Hyun Hee, Seoul (KR); Lee, Jea Won, Gyeonggi-do (KR); Lee, Jong Ho, Gyeonggi-do (KR); Hwang, Kyung Ho, Gyeonggi-do (KR)
(74) Representative: Grünecker, Kinkeldey, Stockmair & Schwanhäusser

(57) **Abstract**

A dishwasher including a washing compartment (11a) at which washing of dishware is performed, a water collecting unit (15)provided at a lower portion of the washing compartment in a concave manner to collect water that has been used for the washing, a micro filter (22) disposed at the water collecting unit and configured to filter garbage being generated at the time of the washing of the dishware, and an ultrasonic wave generating apparatus (26) configured to radiate an ultrasonic wave at the micro filter, thereby automatically cleaning the micro filter and thus, a user may not need to directly clean the micro filter.

## Description

### BACKGROUND

### 1. Field

Embodiments of the present disclosure relate to a dishwasher provided with a micro filter disposed at a water collecting unit thereof configured to collect water to filter garbage that is generated at the time of washing dishware.

### 2. Description of the Related Art

In general, a dishwasher includes a body provided with an insertion port configured to insert dishware provided at a front surface thereof, a washing compartment disposed at an inner side of the insertion port, and a door to open/close the insertion port, and at an inside the washing compartment, structures, such as a rack configured for a storage of dishware and nozzles to wash the garbage of the dishware by spraying water on the dishware stored at the rack, are included.

At a lower portion of the washing compartment, a water collecting unit configured to collect, circulate or discharge water which is used for washing dishware is provided, and at the water collecting unit, the garbage that is separated from the dishware is collected along with the water.

At this time, when the water collected at the water collecting unit is introduced into a circulation pump configured to circulate the water, the operation of the circulation pump may be interrupted, and thus a filter configured to filter the garbage and prevent the garbage from being introduced into the circulation pump is disposed at the water collecting unit.

The filter includes a micro filter to filter the garbage of small size, a coarse filter to filter the garbage having a particle that is larger than a predetermined size, and a fine filter having a hole that is larger than a hole of the micro filter and smaller than a hole of the coarse filter, and since the garbage of micro size is caught at the micro filter while being used, a user may need to periodically separate and clean the micro filter.

### SUMMARY

Therefore, it is an aspect of the present disclosure to provide a dishwasher having a micro filter that is not needed to be separated to be cleaned.

Additional aspects of the disclosure will be set forth in part in the description which follows and, in part, will be apparent from the description, or may be learned by practice of the disclosure.

In accordance with one aspect of the present disclosure, a dishwasher includes a washing compartment, a water collecting unit, a micro filter, and an ultrasonic wave generating apparatus. The washing compartment allows a washing of dishware to be performed therein. The water collecting unit may be provided at a lower portion of the washing compartment in a concave manner to collect water that has been used for the washing. The micro filter may be disposed at the water collecting unit and configured to filter garbage being generated at the time of the washing of the dishware. The ultrasonic wave generating apparatus may be configured to radiate an ultrasonic wave at the micro filter.

The micro filter may include a filter film to filter garbage of micro size, and a frame formed in a shape of a grid so that the filter film maintains a constant shape.

The micro filter may be formed in a shape of a cylinder having an upper surface thereof and a lower surface thereof open. The ultrasonic wave generating apparatus may include an ultrasonic wave vibrator that is formed in a shape of a cylinder having a diameter smaller than a diameter of the micro filter and is disposed at an inside the micro filter.

The ultrasonic wave generating apparatus may include a vibration plate and an ultrasonic wave vibrator. The vibration plate may be formed of a metal panel. The ultrasonic wave vibrator may be disposed at one surface of the vibration plate and allow the vibration plate to be vibrated.

The vibration plate may be formed to have an arc-shape cross section, and may be disposed at an inner circumferential surface of the water collecting unit. The ultrasonic wave vibrator may make contact with an outer circumferential surface of the vibration plate while passing through the water collecting unit.

The vibration plate may be formed in a shape of a panel and disposed at a lower surface of an inside of the water collecting unit. The ultrasonic wave vibrator may make contact with a lower surface of the vibration plate while passing through the water collecting unit.

The micro filter may have a diameter that gradually increases while proceeding from one of an upper end thereof and a lower end thereof to the other one of the upper end thereof and the lower end thereof.

The dishwasher may further include a turbidity sensor installed at the water collecting unit to measure turbidity of the water that is stored at the water collecting unit.

In accordance with another aspect of the present disclosure, a dishwasher includes a body, at least one nozzle, at least one filter and an ultrasonic wave. The body may have a washing compartment at which a washing of dishware is being performed, and a water collecting unit provided at a lower portion of the washing compartment in a concave manner. The at least one nozzle may be disposed at an inside the washing compartment to spray water toward the dishware disposed at an inside the washing compartment. The at least one filter may be disposed at the water collecting unit to filter garbage. The ultrasonic wave generating apparatus may be disposed at the water collecting unit to radiate an ultrasonic wave at the filter.

The filter may include a micro filter formed in a shape of a cylinder having an upper surface thereof and a lower surface thereof open, a coarse filter installed through the open upper surface of the micro filter, and a fine filter installed to cover the water collecting unit.

The micro filter may include a filter film configured to filter garbage of micro size, and a frame formed in a shape of a grid so that the filter film maintains a constant shape.

The ultrasonic wave generating apparatus may include an ultrasonic wave vibrator that is formed in a shape of a cylinder having a diameter smaller than a diameter of the micro filter and is disposed at an inside the micro filter.

The ultrasonic wave generating apparatus may include a vibration plate and an ultrasonic wave. The vibration plate may be formed of a metal panel. The ultrasonic wave vibrator may be disposed at one surface of the vibration plate and allow the vibration plate to be vibrated.

The dishwasher may further include a circulation pump and a circulation pipe that are configured to deliver the water of the water collecting unit to the nozzle, and a draining pump and a draining pipe that are configured to drain the water of the water collecting unit to an outside.

In accordance with another aspect of the present disclosure, a method of controlling a dishwasher includes supplying water at a washing compartment, washing dishware by spraying water of the water collecting unit provided at a lower portion of the washing compartment through a nozzle, draining water having being used in the washing from the water collecting unit to an outside, and cleaning a micro filter by radiating an ultrasonic wave at the micro filter in a state of the water collecting unit filled with water.

The cleaning of the micro filter by radiating the ultrasonic wave at the micro filter may be performed before the draining of water having been used in the washing starts.

The cleaning of the micro filter by radiating the ultrasonic wave at the micro filter may be performed during the draining of water having been used in the washing is performed.

A time during which the cleaning of the micro filter by radiating the ultrasonic wave at the micro filter is performed may be shorter than a time during which the draining of water having been used in the washing is performed.

The draining of water having been used in the washing may include a first draining and a second draining. The first draining may be configured to drain a portion of the water having been used in the washing to an outside through a draining pump. The second draining may be configured to drain a remaining of the water having been used in the washing to an outside through the draining pump. The draining pump may be temporarily stopped after the first draining is performed, the micro filter may be cleaned in a state when the draining pump is stopped, and the second draining may be performed after the cleaning of the micro filter.

The cleaning of the micro filter by radiating the ultrasonic wave at the micro filter may be selectively performed according to turbidity of the water, which is detected through a turbidity sensor, at an inside the water collecting unit.

In accordance with another aspect of the present disclosure, a method of controlling a dishwasher includes supplying water so that a micro filter installed at a water collecting unit of a washing compartment is submerged under water, cleaning the micro filter by radiating an ultrasonic wave at the micro filter, and draining the water of the water collecting unit to an outside.

The supplying of the water, the cleaning of the micro filter and the draining of the water may be selectively performed according to manipulation of a user.

The supplying of the water, the cleaning of the micro filter and the draining of the water may be selectively performed according to turbidity of water that is detected by a turbidity sensor disposed at the water collecting unit.

The supplying of the water, the cleaning of the micro filter and the draining of the water may be repeated until the turbidity of water detected by the turbidity sensor reaches below a predetermined level.

### BRIEF DESCRIPTION OF THE DRAWINGS

These and/or other aspects of the disclosure will become apparent and more readily appreciated from the following description of embodiments, taken in conjunction with the accompanying drawings of which:
FIG. 1 is a cross-sectional view of a dishwasher in accordance with an embodiment of the present disclosure.
FIG. 2 is a perspective view of a water collecting unit of the dishwasher in accordance with an embodiment of the present disclosure and an ultrasonic wave generating apparatus installed at the water collecting unit.
FIG. 3 is a cross-sectional view of the water collecting unit of the dishwasher and an ultrasonic wave generating apparatus installed at the water collecting unit in accordance with an embodiment of the present disclosure.
FIG. 4 is a control block diagram applied to the dishwasher of the present disclosure in accordance with an embodiment of the present disclosure.
FIG. 5 is a flow chart showing a process of the dishwasher of the present disclosure performing a washing.
FIG. 6 is a flow chart showing a process of the dishwasher of the present disclosure independently performing a cleaning on a micro filter.
FIG. 7 is a perspective view of a water collecting unit of a dishwasher in accordance with another embodiment of the present disclosure and an ultrasonic wave generating apparatus installed at the water collecting unit.
FIG. 8 is a cross-sectional view of the water collecting unit of a dishwasher in accordance with another embodiment of the present disclosure and the ultrasonic wave generating apparatus installed at the water collecting unit.
FIG. 9 is a cross sectional view of a water collecting unit of a dishwasher in accordance with still another embodiment of the present disclosure and an ultrasonic wave generating apparatus installed at the water collecting unit.
FIG. 10 is a cross-sectional view of the water collecting unit of a dishwasher in accordance with still another embodiment of the present disclosure and the ultrasonic wave generating apparatus installed at the water collecting unit.

### DETAILED DESCRIPTION

Reference will now be made in detail to embodiments of the present disclosure, examples of which are illustrated in the accompanying drawings, wherein like reference numerals refer to like components throughout.

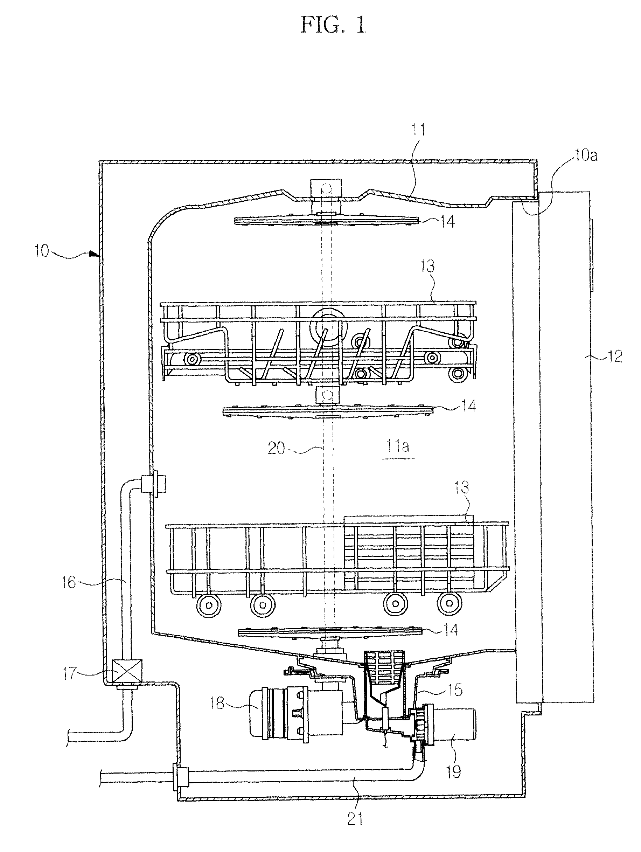

Referring to FIG. 1, a dishwasher in accordance with an embodiment of the present disclosure includes a body 10 forming an exterior appearance thereof and provided with an insertion port 10a at a front surface thereof for a insertion and a withdrawal of dishware, a washing tub 11 disposed at an inner side of the insertion port 10a and forming a washing compartment 11a at which a washing of dishware is performed, and a door 12 having a lower end rotatably installed at a lower portion of the body 10 to open/close the insertion port 10a.

At an inside the washing compartment 11a, a plurality of racks 13 to store dishware, and a plurality of nozzles 14 configured to spray water toward the dishware disposed at an inside the washing compartment 11a while the dishware is in the state of being stored at the racks 13. The racks 13, for example, may be provided with two units thereof, and are disposed one on top of another, while each of the racks 13 is installed at the washing compartment 11a so as to enable forward/backward movement, and is configured to be inserted into the washing compartment 11a as moved backward and to be withdrawn from the washing compartment 11a as moved forward. The nozzles 14, for example, may be provided with three units thereof, and are rotatably installed at lower sides of the two racks 13 and at an upper side of the rack 13 disposed at an upper side, respectively, to spray water at the dishware stored at the racks 13. Although the two units of racks and three units of nozzles are shown in the drawing, the number of racks and nozzles may not be limited thereto. For example, at least one rack and at least one nozzle may be provided in the washing compartment.

A water supplying pipe 16 configured to guide water from an outside water source (not shown) to the washing compartment 11a is connected to a rear side of the washing tub 11, and a water supplying valve 17 configured to selectively open/close the water supplying pipe 16 is disposed at the water supplying pipe 16.

At a lower portion of the washing tub 11, a water collecting unit 15, which is configured to collect the water supplied through the water supplying pipe 16 to an inside the washing compartment 11a or the water sprayed from the nozzles 14. The water collecting unit 15 may be provided in a concave manner, for example. At the water collecting unit 15, a draining pump 19 to discharge the water collected at the water collecting unit 15 to an outside, and a circulation pump 18 configured to deliver the water collected at the water collecting unit 15 to the nozzles 14 to circulate, is installed. A draining pipe 21 to guide water from the draining pump 19 to an outside is connected to the draining pump 19, and a circulation pipe 20 to guide water to the nozzles 14 is connected to the circulation pump 18.

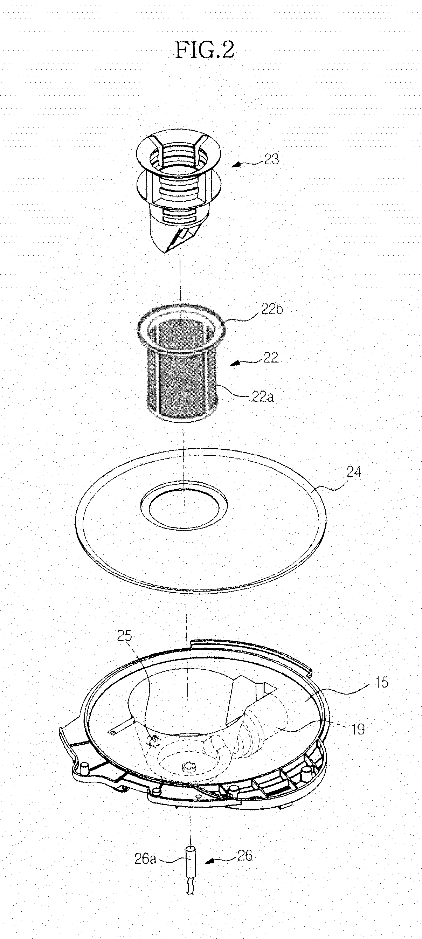

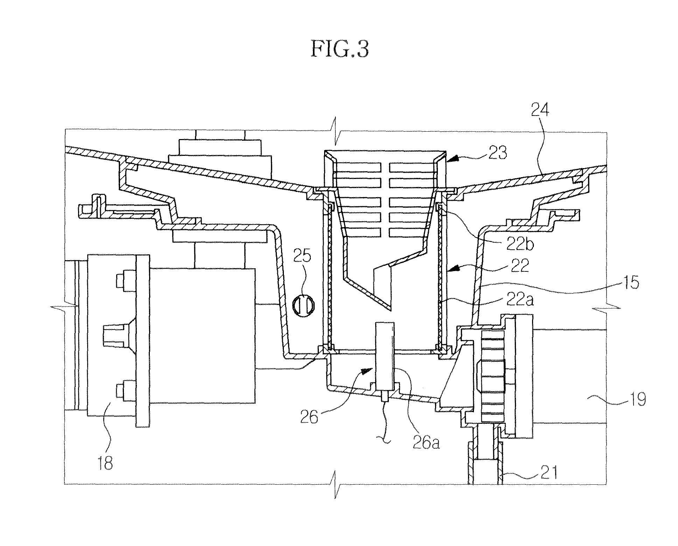

In addition, referring to FIGS. 2 and 3, at the water collecting unit 15, filters 22, 23, and 24 configured to prevent garbage having a size greater than a predetermined size from being delivered to the circulation pump 18 by filtering the garbage included in the water that is collected at the water collecting unit 15, and a turbidity sensor 25 to measure the turbidity 'T' of the water stored at an inside the water collecting unit 15, are installed.

The filters 22, 23, and 24 in an embodiment of the present disclosure each includes a micro filter 22, for example, formed in the shape of a cylinder, having an upper surface thereof and a lower surface thereof open to filter the garbage of a small size, a coarse filter 23 installed through the open upper surface of the micro filter 22 and configured to filter the garbage having a particle that is larger than a predetermined size before the garbage having a particle that is larger than a predetermined size is reached at the micro filter 22, and a fine filter 24 having a filter hole that is larger than a filter hole of the micro filter 22 and smaller than a filter hole of the coarse filter 23 and installed to cover the water collecting unit 15.

The coarse filter 23, for example, may be formed in the shape of a grid to filter the garbage having a size greater than a predetermined size, and is detachably installed at the open upper surface of the micro filter 22. The micro filter 22 includes a filter film 22a configured to pass water therethrough and to filter micro garbage included in the water, and a frame 22b formed in the shape of a grid to maintain the filter film 22a to be disposed in the shape of a cylinder.

With respect to the micro filter 22 described above, the filter film 22a is provided with a dense structure, such as the structure of a fiber, to filter the micro garbage. Thus, when the garbage having a micro size is caught in between the structure of the filter film 22a, the removing of the garbage as such is difficult.

Thus, the dishwasher in accordance with an embodiment of the present disclosure includes an ultrasonic wave generating apparatus 26 configured to automatically clean the filter film 22a of the micro filter 22. The ultrasonic wave generating apparatus 26 radiates the ultrasonic wave at the micro filter 22 installed at the water collecting unit 15 in a state of the water collecting unit 15 filled with water such that a cavitation phenomenon occurs at the water at an inside the water collecting unit 15 by the ultrasonic wave, thereby enabling the garbage caught in between the structure of the filter film 22a of the micro filter 22 to be removed from the filter film 22a.

In an embodiment of the present disclosure, the ultrasonic wave generating apparatus 26 includes an ultrasonic wave vibrator 26a formed in the shape of a cylinder having a diameter that is smaller than a diameter of the micro filter 22, and the ultrasonic wave vibrator 26a is disposed at an inside the micro filter 22 through the open lower surface of the micro filter 22. As the ultrasonic wave generating apparatus is disposed at an inner side of the micro filter 22 by composing the ultrasonic wave vibrator 26a as the above, the ultrasonic wave generated from the ultrasonic wave vibrator 26a may be evenly delivered to the filter film 22a, which is disposed at an outer side of a radial direction of the ultrasonic wave vibrator 26a, to thoroughly clean the filter film 22a overall.

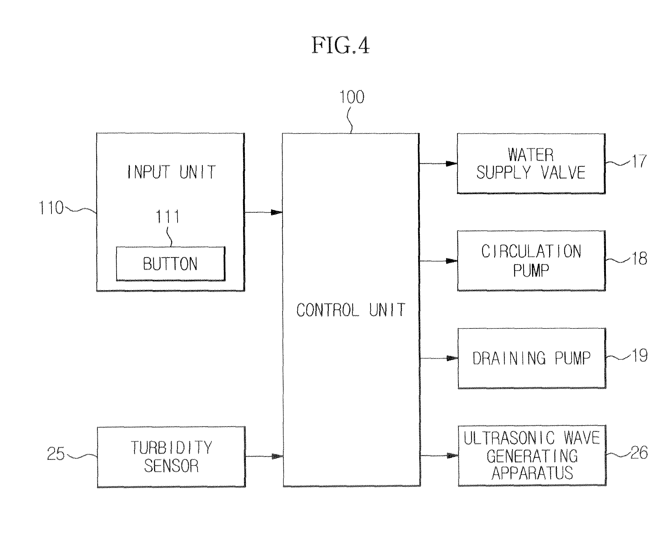

In addition, referring to FIG. 4, the dishwasher includes an input unit 110 for a user to selectively drive the motion of the dishwasher, and a control unit 100 configured to receive signals from the input unit 110 and the turbidity sensor 25, which is described above, to control the water supplying valve 17, the circulation pump 18, the draining pump 19, and the ultrasonic wave generating apparatus 26. The input unit 110 may include a button 111 for a user to selectively drive the motion of the dishwasher.

Hereinafter, the control method of the dishwasher composed as the above will be described in detail by referring to the drawing.

As the dishwasher is manipulated after disposing dishware at an inside the washing compartment 11a by storing the dishware at the racks 13, the supplying of water is taken place as the water is supplied to an inside the washing compartment 11a through the water supplying pipe 16.

The water supplied to an inside the washing compartment 11a is collected at the water collecting unit 15, and the water collected at the water collecting unit 15 is delivered to the nozzles 14 through the circulation pump 18 and the circulation pipe 20. The water is sprayed from the nozzles 14 to the dishware, and the washing of the dishware is taken place. According to the above, the garbage on the dishware is separated from the dishware, and is collected at the water collecting unit 15 along with the water. The garbage from the water and the garbage gathering at the water collecting unit 15 is filtered by the coarse filter 23 and the micro filter 22, and the water is delivered to the nozzles 14 again by the circulation pump 18 to be used again for the washing of the dishware.

After the washing is completed, the garbage is filtered by the filters 22, 23, and 24 disposed at the water collecting unit 15, and the water is collected at the water collecting unit 15 to be discharged to an outside through the draining pipe 21 according to the operation of the draining pump 19.

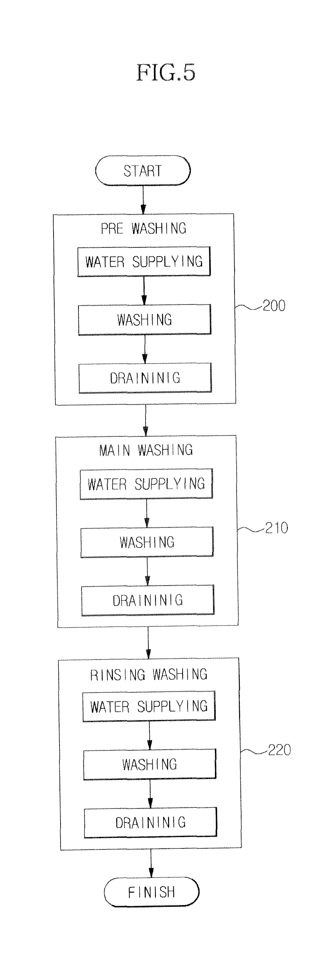

The washing of the dishware by the dishwasher is taken place as the processes of the water supplying, the washing, and the draining are repeated in a plurality of number of times. That is, referring to FIG. 5, a pre washing 200 of initially washing dishware by supplying a portion of detergent while repeating the above three processes once, a main washing 210 of repeating the above three processes at least once while supplying the remaining of the detergent after the pre washing is completed, and a rinsing washing 220 of removing the detergent on the dishware by repeating the above three processes at least once are sequentially performed.

The process of the micro filter 22 being cleaned by the ultrasonic wave generated from the ultrasonic wave generating apparatus 26 may be performed in the process of the water of the water collecting unit 15 being discharged to an outside through the draining pump 19 such that the garbage separated from the micro filter 22 is discharged to the outside along with the water being discharged to the outside.

From the above, the ultrasonic wave generated from the ultrasonic wave generating apparatus 26 may be delivered to the micro filter 22 only in the state when water is present at the water collecting unit 15, and thus the process of the water being drained through the draining pump 19 is temporarily stopped, and in the state of the draining pump 19 temporarily stopped, the micro filter 22 may be cleaned by the ultrasonic wave generating apparatus 26, so that the cleaning of the micro filter 22 may be taken place further efficiently. That is, the draining is made to be taken place while divided into a first draining configured to drain a portion of the water being used in the washing to an outside through the draining pump 19 and a second draining to drain the remaining of the water being used in the washing to an outside through the draining pump 19. After the first draining is performed, the draining pump 19 is temporarily stopped, and in the state when water is present at the water collecting unit 15 due to the temporary stopping of the draining pump 19, the micro filter 22 is cleaned by the ultrasonic wave generating apparatus 26 being driven. After the cleaning of the micro filter 22 is performed, the second draining is performed by driving the draining pump 19 again, and all of the remaining water that is present at the water collecting unit 15 after being used for the washing is drained.

Even if the operation time of the ultrasonic wave generating apparatus 26 is set to be shorter than the draining time, the ultrasonic wave generating apparatus 26 may be able to clean the micro filter 22 in the state of water being present at the water collecting unit 15.

Although the ultrasonic wave generating apparatus 26 in an embodiment of the present disclosure is configured to be driven in the process of the water of the water collecting unit 15 being discharged to an outside, the present disclosure is not limited hereto, and as long as the water that serves as a medium is filled at the water collecting unit 15, the cleaning of the micro filter 22 through the ultrasonic wave generating apparatus 26 may take place at any point in time.

Thus, as described above, the cleaning of the micro filter 22 through the ultrasonic wave generating apparatus 26 is desired to take place during when the draining is being performed, or before the draining is started after the washing is completed.

In addition, the cleaning of the micro filter 22 may be configured to be performed as a user directly selects through the input unit 110 provided on the dishwasher. For example, the button 111 may be used for a user to perform the cleaning of the micro filter.

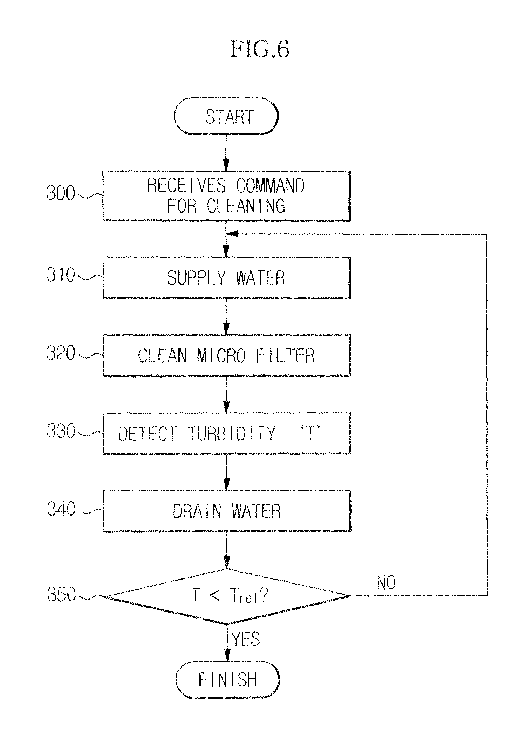

Referring to FIG. 6, when a command to clean is input into the control unit 100 as a user selects a cleaning function for the micro filter 22 by manipulating the input unit 110, for example using the button 111, the control unit 100 controls the water supplying valve 17 so that the supply of the water takes place (310) until the micro film 22 installed at the water collecting unit 15 is submerged under the water, and after the supply of the water (310) is completed, the control unit 100 enables the cleaning of the micro filter 22 to be proceeded by driving the ultrasonic wave generating apparatus 26 (320). After the cleaning of the micro filter 22 (320) is proceeded for a predetermined period of time, the turbidity 'T' of the water stored at the water collecting unit 15 is detected through the turbidity sensor 25 (330). After the turbidity 'T' is detected (330), the control unit 100 drains the water of the water collecting unit 15 by driving the draining pump 19 (340). After the draining is completed (340), the detected turbidity 'T' is compared with a predetermined reference turbidity 'Tref' and when the turbidity 'T' detected at the turbidity sensor 25 is determined to be lower than the predetermined reference turbidity 'Tref', the entire process of the cleaning the micro filter 22 ends. In the contrary, when the turbidity 'T' detected at the turbidity sensor 25 is determined to be equal to or higher than when compared to the predetermined reference turbidity 'Tref', the supplying of the water (310), the cleaning of the micro filter 22 (320), the detecting of the turbidity 'T' (330), and the draining (340) are repeated until the turbidity 'T' detected is lower than the reference turbidity 'Tref'.

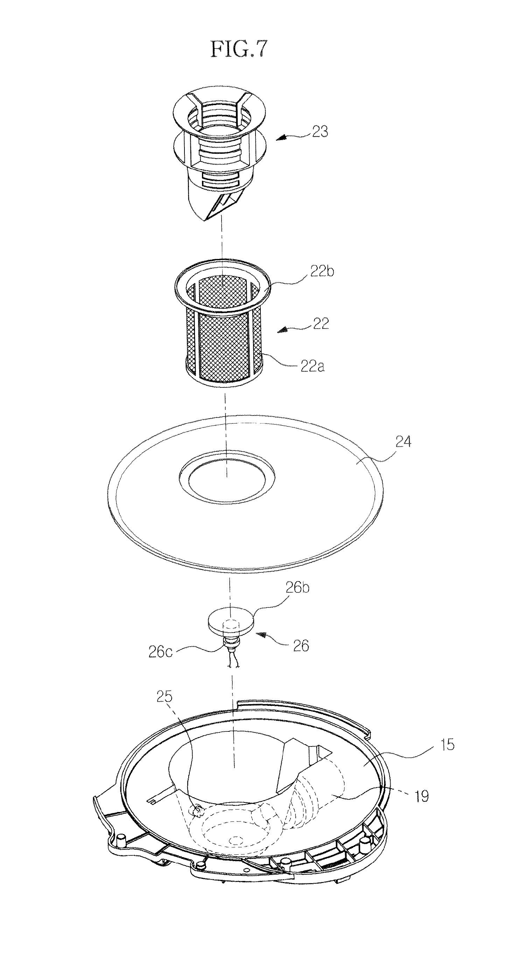

In FIGS. 7 to 10, a dishwasher applied with a ultrasonic wave generating apparatus 26 in accordance with other embodiments of the present disclosure is illustrated. The ultrasonic wave generating apparatus 26 illustrated in FIGS. 7 to 10 includes vibration plates 26b and 26b' each formed of a metal panel, for example, and ultrasonic wave vibrators 26c and 26c' each having one surface thereof disposed in a way to make contact with the vibration plates 26b and 26b', respectively. The ultrasonic wave generating apparatus 26 having the shape as such operates in a scheme that the ultrasonic wave generated from the ultrasonic wave vibrators 26c and 26c' is delivered to the vibration plates 26b and 26b' , respectively, so that the ultrasonic wave is radiated toward the micro filter 22 through the vibration plates 26b and 26b', respectively.

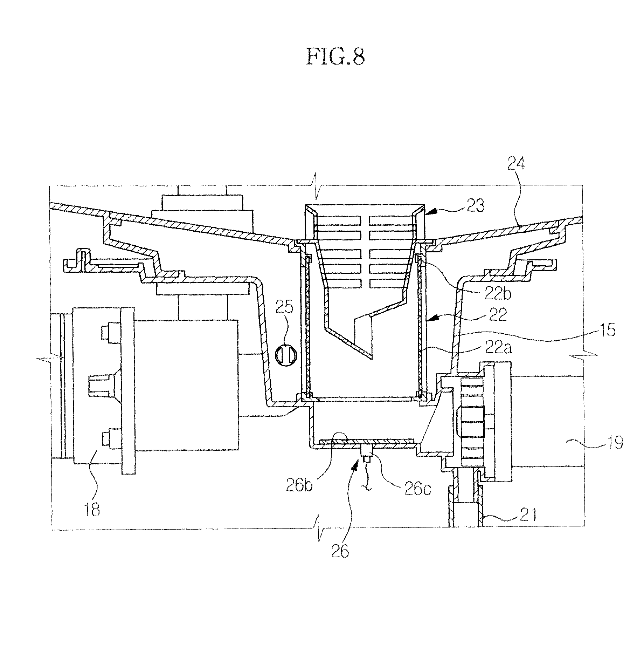

In embodiments disclosed on FIGS. 7 and 8, the vibration plate 26b is formed in the shape of a circular panel, for example, and is disposed at a lower surface of an inside the water collecting unit 15, and the ultrasonic wave vibrator 26c has an upper surface thereof making contact with a lower surface of the vibration plate 26b while passing through a lower surface of the water collecting unit 15. Thus, the ultrasonic wave generated from the ultrasonic wave vibrator 26c is radiated through the vibration plate 26b toward the micro filter 22 disposed at an upper side of the vibration plate 26b to clean the micro filter 22.

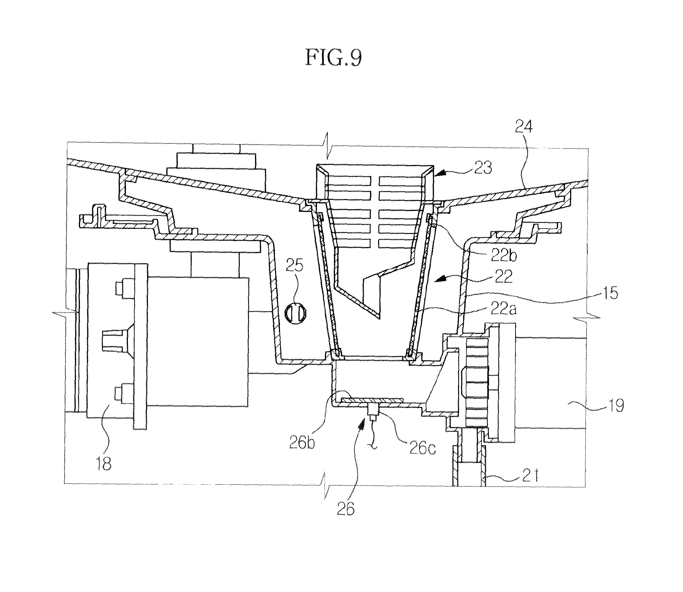

Although the micro filter 22 described in the above embodiments through FIGS. 7 and 8 is formed in the shape of a cylinder, the present disclosure is not limited hereto, and as illustrated on FIG. 9, the micro filter 22 may have a diameter gradually increasing while proceeding from a lower end thereof to an upper end thereof. In addition, although not shown on the drawing, in the contrary, the micro filter 22 may have a diameter gradually increasing while proceeding from the upper end thereof to the lower end thereof.

As the above, as the diameter of the micro filter 22 is provided to be gradually increased while proceeding from one of the upper end and the lower end thereof to the other one of the upper end and the lower end thereof, the ultrasonic wave, which is radiated from the vibration plate 26b disposed at a lower surface of inside the water collecting unit 15 may be delivered in a further efficient manner toward the filter film 22a without being blocked by the frame 22b of the micro filter 22, and thus the filter film 22a of the micro filter 22 may be cleaned in a further efficient manner.

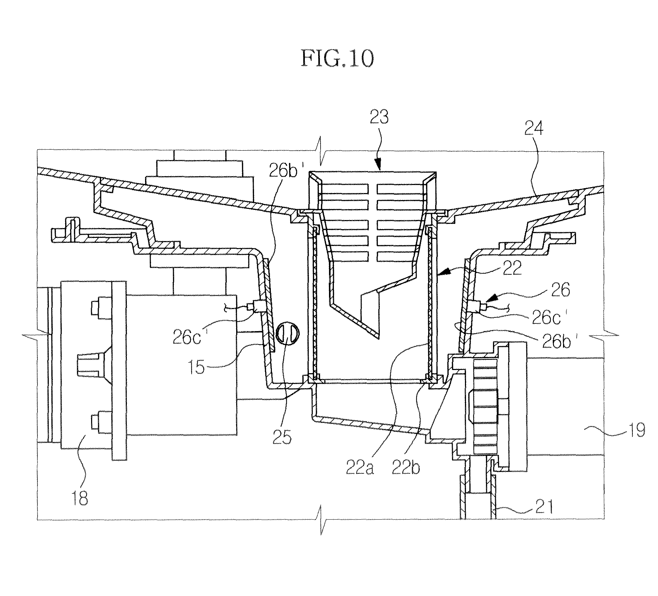

In addition, as illustrated on an embodiment disclosed on FIG. 10, disposing the vibration plate 26b' at an inner circumferential surface of the water collecting unit 15 after forming the vibration plate 26b' in the shape of an arc or a cylinder, for example, and disposing the ultrasonic vibrator 26c' such that the ultrasonic vibrator 26c makes contact with an outer circumferential surface of the vibration plate 26b' after passing through a side surface of the water collecting unit 15. In an embodiment of the present disclosure, two units of the ultrasonic vibrators 26c' are provided to be disposed at both sides of the water collecting unit 15. Thus, the ultrasonic wave generated from each of the ultrasonic wave vibrators 26c' is radiated through the vibration plate 26b' toward the micro filter 22 disposed at an inner side in a radial direction thereof to clean the micro filter 22. Although two units of the ultrasonic vibrators are shown in FIG. 10, the present disclosure is not limited thereto. For example, at least one unit of the ultrasonic vibrator may be provided.

Although the ultrasonic wave vibrators 26c' in an embodiment of the present disclosure are disposed at both sides of the vibration plate 26b' having a cylinder shape, the present disclosure is not limited hereto, and depending on the design, the ultrasonic wave vibrators 26C' may be provided in one unit or more than three units and disposed at the vibration plate 26b'.

As described above, the dishwasher is provided with the ultrasonic wave generating apparatus configured to radiate an ultrasonic wave to the micro filter, and thus the micro filter may be automatically cleaned, so that a user may not directly need to clean the micro filter.

Although a few embodiments of the present disclosure have been shown and described, it would be appreciated by those skilled in the art that changes may be made in these embodiments without departing from the principles and spirit of the disclosure, the scope of which is defined in the claims and their equivalents.

## Claims

1. A dishwasher, comprising:
a washing compartment at which a washing of dishware is performed,
a water collecting unit provided at a lower portion of the washing compartment in a concave manner to collect water that has been used for the washing,
a micro filter disposed at the water collecting unit and configured to filter garbage being generated at the time of the washing of the dishware, and
at least one ultrasonic wave generating apparatus configured to radiate an ultrasonic wave at the micro filter.

2. The dishwasher of claim 1, wherein the micro filter oomprises a filter film to filter garbage of micro size, and a frame formed in a shape of a grid so that the filter film maintains a constant shape.

3. The dishwasher of claim 1, wherein the micro filter is formed in a shape of a cylinder having an upper surface thereof and a lower surface thereof open, and
the ultrasonic wave generating apparatus comprises an ultrasonic wave vibrator that is formed in a shape of a cylinder having a diameter smaller than a diameter of the micro filter and is disposed at an inside the micro filter.

4. The dishwasher of claim 1, wherein the ultrasonic wave generating apparatus comprises:
at least one vibration plate formed of a metal panel; and
at least one ultrasonic wave vibrator disposed at one surface of the vibration plate and allowing the vibration plate to be vibrated.

5. The dishwasher of claim 4, wherein the vibration plate has an arc-shape cross section, and is disposed at an inner circumferential surface of the water collecting unit, and
the ultrasonic wave vibrator makes contact with an outer circumferential surface of the vibration plate while passing through the water collecting unit.

6. The dishwasher of claim 4, wherein the vibration plate is formed in a shape of a panel and disposed at a lower surface of an inside of the water collecting unit, and
the ultrasonic wave vibrator makes contact with a lower surface of the vibration plate while passing through the water collecting unit.

7. The dishwasher of claim 6, wherein the micro filter has a diameter that gradually increases while proceeding from one of an upper end thereof and a lower end thereof to the other one of the upper end thereof and the lower end thereof.

8. The dishwasher of claim 1, further comprising a turbidity sensor installed at the water collecting unit to measure turbidity of the water that is stored at the water collecting unit.

9. A method of controlling a dishwasher, the method comprising:
supplying water into a washing compartment;
washing dishware by spraying water of the water collecting unit provided at a lower portion of the washing compartment through at least one nozzle;
draining water having being used in the washing from the water collecting unit to an outside; and
cleaning a micro filter by radiating an ultrasonic wave at the micro filter when the water collecting unit filled with water.

10. The method of claim 9, wherein the cleaning of the micro filter by radiating the ultrasonic wave at the micro filter is performed before the draining of water having been used in the washing starts.

11. The method of claim 9, wherein the cleaning of the micro filter by radiating the ultrasonic wave at the micro filter is performed during the draining of water having been used in the washing is performed.

12. The method of claim 11, wherein a time during which the cleaning of the micro filter by radiating the ultrasonic wave at the micro filter is performed is shorter than a time during which the draining of water having been used in the washing is performed.

13. The method of claim 11, wherein:
the draining of water having been used in the washing comprises a first draining to drain a portion of the water having been used in the washing to an outside through a draining pump, and a second draining to drain a remaining of the water having been used in the washing to an outside through the draining pump, and
the draining pump is temporarily stopped after the first draining is performed, the micro filter is cleaned when the draining pump is stopped, and the second draining is performed after the cleaning of the micro filter.

14. The method of claim 9, wherein the cleaning of the micro filter by radiating the ultrasonic wave at the micro filter is selectively performed according to turbidity of the water, which is detected through a turbidity sensor, at an inside the water collecting unit.
